(19) Europäisches Patentamt
European Patent Office
Office européen des brevets

(11) Publication number: **0 498 615 B1**

# (12) EUROPEAN PATENT SPECIFICATION

(45) Date of publication of patent specification: **12.10.94**

(51) Int. Cl.[5]: **C08L 51/06**, C08F 8/32, C08K 5/32

(21) Application number: **92300930.2**

(22) Date of filing: **04.02.92**

## (54) Modified ethylene-alpha-olefin-non-conjugated diene copolymer rubber composition.

(30) Priority: **04.02.91 JP 13324/91**

(43) Date of publication of application:
**12.08.92 Bulletin 92/33**

(45) Publication of the grant of the patent:
**12.10.94 Bulletin 94/41**

(84) Designated Contracting States:
**DE ES FR GB IT**

(56) References cited:
**EP-A- 0 014 018**
**EP-A- 0 253 365**
**EP-A- 0 391 733**
**EP-A- 0 394 016**
**EP-A- 0 451 539**

(73) Proprietor: **SUMITOMO CHEMICAL COMPANY LIMITED**
**5-33, Kitahama 4-chome,**
**Chuo-ku**
**Osaka-shi, Osaka 541 (JP)**

(72) Inventor: **Yamamoto, Keisaku**
**5-3-14, Aobadai**
**Ichihara-shi, Chiba 299-01 (JP)**
Inventor: **Tanimoto, Yoshio**
**438-79, Joza**
**Sakura-shi, Chiba 285 (JP)**
Inventor: **Ikeda, Kiyosi**
**152-1, Ichihara**
**Ichihara-shi, Chiba 290 (JP)**
Inventor: **Usuda, Eiichi**
**3-10-7, Izumidai**
**Ichihara-shi, Chiba 299-01 (JP)**

(74) Representative: **Cresswell, Thomas Anthony et al**
**J.A. Kemp & Co.**
**14 South Square**
**Gray's Inn**
**London WC1R 5LX (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

The present invention relates to a modified ethylene-α-olefin-non-conjugated diene copolymer rubber composition. More particularly, it relates to a modified ethylene-α-olefin-non-conjugated diene copolymer rubber composition which shows excellent fatigue resistance not only in ordinary temperature atmosphere, but also in high temperature atmosphere owing to its excellent heat resistance and fatigue resistance.

The rubber composition of the present invention can be most suitably utilized, for example, as rubber vibration insulators for automobiles and for industrial purposes.

In general, a wide variety of rubber vibration insulators are used for inhibition of noise and vibration in traffic means such as automobiles and motorbikes and in industrial machines. Especially, in the field of automobiles, development of rubber vibration insulators which are excellent in heat resistance and have excellent fatigue resistance not only in ordinary temperature atmosphere, but also in high temperature atmosphere and which can inhibit generation of noise and vibration and can provide comfortable ride have been increasingly demanded with recent enhancement in performance of engines.

Characteristics required for such rubber vibration insulators are as follows.

(1) They must be excellent in heat resistance.

(2) They must be excellent in fatigue resistance and endurance against external force applied repeatedly for a long time in ordinary temperature and high temperature atmospheres.

Besides, it is also important that they are not inferior to conventional rubbers in static rubber characteristics such as compression set and tear strength.

Highly unsaturated rubbers such as natural rubbers and styrene-butadiene rubbers (SBR) have been mainly used as conventional rubber vibration insulators. That is because unsaturated rubbers such as natural rubbers and SBR are superior to lowly unsaturated rubbers in fatigue resistance and dynamic characteristics. However, it has been known that these highly unsaturated rubbers are inferior in heat resistance to lowly unsaturated rubbers such as ethylene-α-olefin-non-conjugated diene copolymer rubbers and for this reason, use of highly unsaturated rubbers has often been limited to the use at relatively low temperatures.

On the other hand, lowly unsaturated rubbers such as ethylene-α-olefin-non-conjugated diene copolymer rubbers have excellent heat resistance, but are inferior in fatigue resistance against external forces applied repeatedly for a long time and hence, cannot be used under severe external forces or severe deformation conditions.

Accordingly, the object of the present invention is to provide rubber compositions which are excellent in heat resistance and besides in fatigue resistance against repeated deformation in ordinary and high temperature atmospheres.

As a result of intensive research conducted by the inventors, the present invention has been accomplished.

That is, the present invention relates to a modified ethylene-α-olefin-non-conjugated diene copolymer rubber composition which comprises an ethylene-α-olefin-non-conjugated diene copolymer rubber modified with unsaturated carboxylic acids or derivatives thereof and at least one dinitroamine represented by the following formula (A):

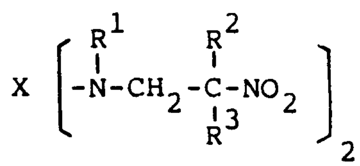

(A)

(wherein X represents a divalent chain aliphatic, cyclic aliphatic or aromatic group which may contain halogen or oxygen, $R^1$ represents a hydrogen atom, a chain aliphatic group, a cyclic aliphatic group or an aromatic group with a proviso that when both X and $R^1$ represent a chain aliphatic group, nitrogen atoms may further link to each other through $R^1$, and $R^2$ and $R^3$ each represents a hydrogen atom or an alkyl group of 1 - 12 carbon atoms and $R^2$ and $R^3$ may link to each other to form a ring).

The present invention will be explained in detail. As used herein the "aliphatic" groups are preferably $C_{2-12}$ straight or branched chain alkylenes, more preferably $C_{2-12}$ polymethylene and $C_{2-12}$ branched chain alkylenes comprising a polymethylene group having one or more methyl substituents; the "cycloaliphatic" groups are preferably $C_{3-7}$ cycloaliphatic groups, more preferably cyclohexyl and the "aromatic" groups are preferably groups comprising one or more optionally fused benzene rings, for

instance phenyl, diphenyl and naphthyl.

The modified ethylene-α-olefin-non-conjugated diene copolymer rubbers used in the present invention are ethylene-α-olefin-non-conjugated diene copolymer rubbers modified with unsaturated carboxylic acids or derivatives thereof.

Examples of the α-olefin which is one constituent of ethylene-α-olefin-non-conjugated diene copolymer rubbers are propylene, 1-butene and 1-hexene and preferred is propylene. Examples of the non-conjugated diene are 5-methylene-2-norbornene, 5-ethylidene-2-norbornene and dicyclopentadiene and preferred is 5-ethylidene-2-norbornene.

The unsaturated carboxylic acids used for modification of ethylene-α-olefin-non-conjugated diene copolymer rubbers include, for example, acrylic acid, methacrylic acid, maleic acid, itaconic acid, citraconic acid, hymic acid, bicyclo(2,2,2)octa-5-ene-2,3-dicarboxylic acid, 4-methylcyclohexa-4-ene-1,2-dicarboxylic acid, 1,2,3,4,5,8,9,10-octahydronaphthalene-2,3-dicarboxylic acid, bicyclo(2,2,1)octa-7-ene-2,3,5,6-tetracarboxylic acid, and 7-oxabicyclo(2,2,1)hepta-5-ene-2,3-dicarboxylic acid.

The derivatives of unsaturated carboxylic acids include acid anhydrides, esters, amides, imides and metal salts. Examples thereof are maleic anhydride, itaconic anhydride, citraconic anhydride, hymic anhydride, monoethyl maleate, monoethyl fumarate, monomethyl itaconate, monomethyl fumarate, dimethylaminoethyl methacrylate, dimethylaminopropylacrylamide, acrylamide, methacrylamide, maleic acid monoamide, maleic acid diamide, maleic acid-N-monoethylamide, maleic acid-N,N-diethylamide,maleic acid-N-monobutylamide, maleic acid-N,N-dibutylamide, fumaric acid monoamide, fumaric acid diamide, fumaric acid-N-monobutylamide, fumaric acid-N,N-diethylamide, fumaric acid-N-monobutylamide, fumaric acid-N,N-dibutylamide, maleimide, N-butylmaleimide, N-phenylmaleimide, sodium acrylate, sodium methacrylate, potassium acrylate and potassium methacrylate. These unsaturated carboxylic acids or derivatives thereof may be used singly or in combination of two or more. Maleic anhydride is generally used.

Generally the modification of ethylene-α-olefin-non-conjugated diene copolymer rubbers is attained by kneading the copolymer rubber with the carboxylic acid or derivative thereof in the presence of a radical former at 110 °C or higher.

The radical former used here includes, for example, 2,2′-dithiobis-benzothiazole and organic peroxides. The organic peroxides are not critical and there may be used at least one of organic peroxides such as diaryl peroxides, dialkyl peroxides, peroxy esters and perketals. Examples thereof are benzoyl peroxide, 1,1-di-t-butylperoxy 3,3,5-trimethylcyclohexane, di-t-butylperoxydiisopropylbenzene, dicumyl peroxide and 2,5-dimethyl-2,5-di(t-butylperoxy)hexane.

The kneading can be carried out by internal kneading machines such as Banbury mixer and kneader or extruders.

Other methods for modification of ethylene-α-olefin-non-conjugated diene copolymer rubbers include one which comprises dissolving the copolymer rubber and the carboxylic acid or derivative thereof in an organic solvent such as xylene, adding a radical former to the solution in a nitrogen atmosphere to carry out the reaction with heating under stirring, then cooling the reaction mixture, introducing it in a large amount of a non-solvent such as acetone to recover the polymer, washing and drying it. JP-A-62-112614 can be referred to as the methods of modification in the form of solvents as mentioned above.

Examples of the dinitrodiamines represented by the formula (A) used in the present invention are shown below. In the following examples, -Z represents

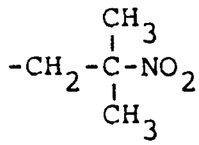

(1) $Z\text{-}NH\text{-}(CH_2)_2\text{-}NH\text{-}Z$

(2) $Z\text{-}NH\text{-}(CH_2)_3\text{-}NH\text{-}Z$

(3) $Z\text{-}NH\text{-}(CH_2)_4\text{-}NH\text{-}Z$

(4) $Z\text{-}NH\text{-}(CH_2)_6\text{-}NH\text{-}Z$

(5) $Z\text{-}NH\text{-}(CH_2)_{10}\text{-}NH\text{-}Z$

(6) $Z\text{-}NH\text{-}(CH_2)_{12}\text{-}NH\text{-}Z$

(7) 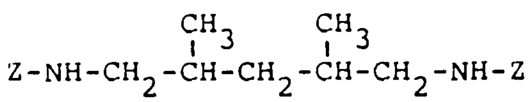

(8) $NO_2\text{-}(CH_2)_2\text{-}NH\text{-}(CH_2)_2\text{-}NH\text{-}(CH_2)_2\text{-}NO_2$

(9) $NO_2\text{-}(CH_2)_2\text{-}NH\text{-}(CH_2)_6\text{-}NH\text{-}(CH_2)_2\text{-}NO_2$

(10) 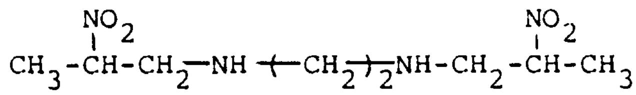

(11) 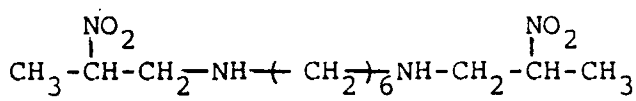

(12) 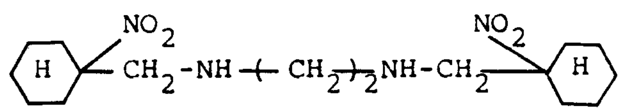

(13) 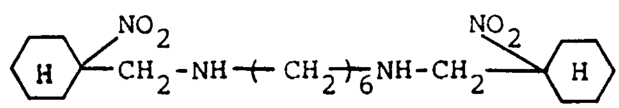

(14) 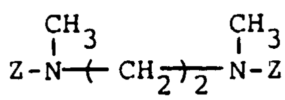

(15) 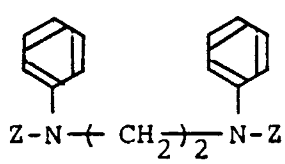

(16) 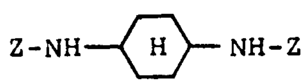

(17) 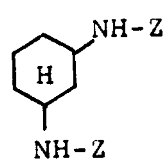

(18) 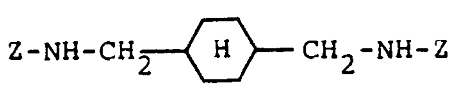

(19) 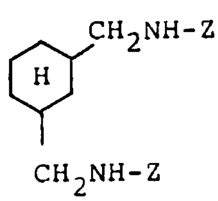

(20) 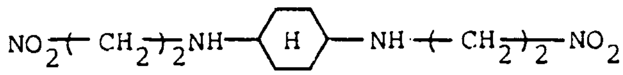

(21) 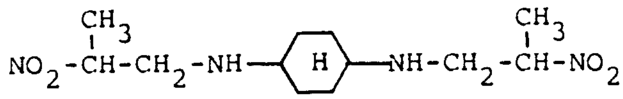

(22) 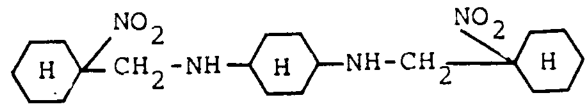

(23) 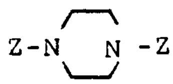

(24) 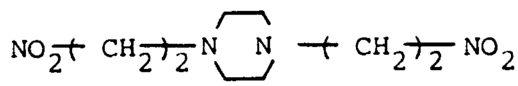

(25) 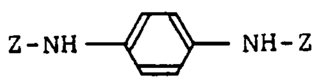

(26) 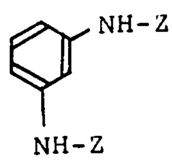

(27) 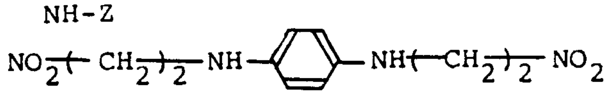

(28) 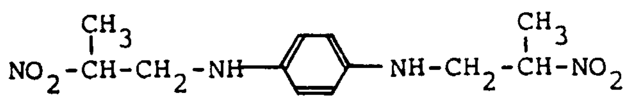

(29) 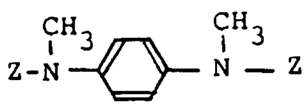

(30) 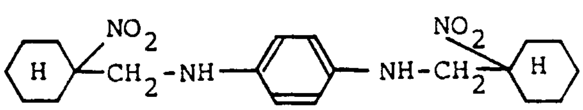

(31) 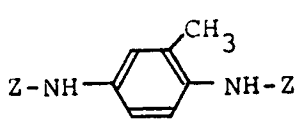

(32) 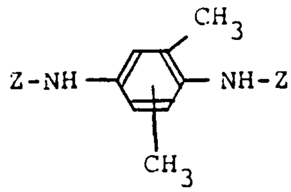

(33) 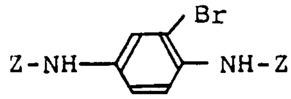

(34) 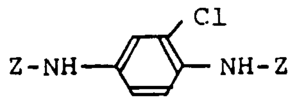

(35) 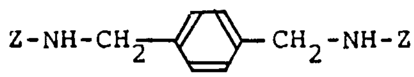

(36) 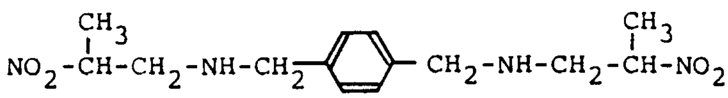

(37) 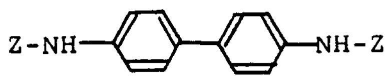

(38) 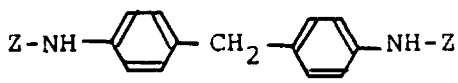

(39) 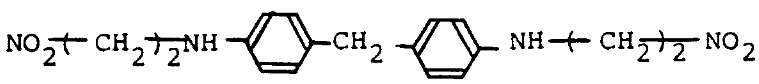

(40) 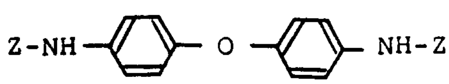

(41) 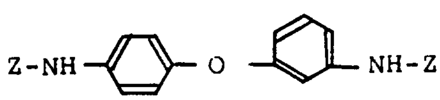

(42) 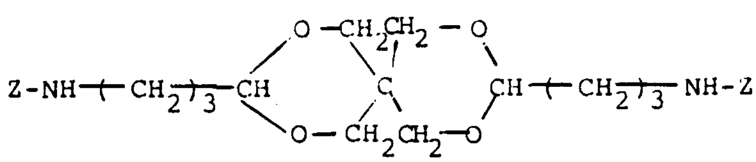

(43) 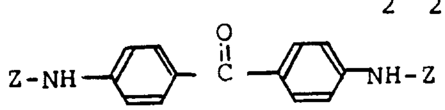

(44) 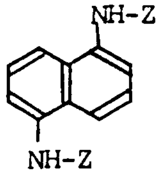

(45) 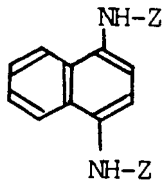

(46) 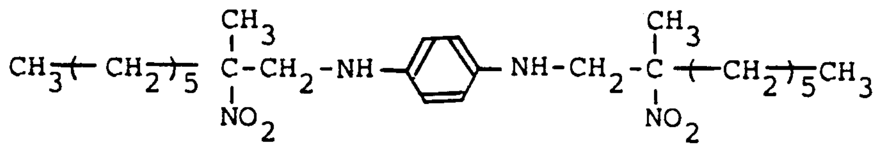

(47) 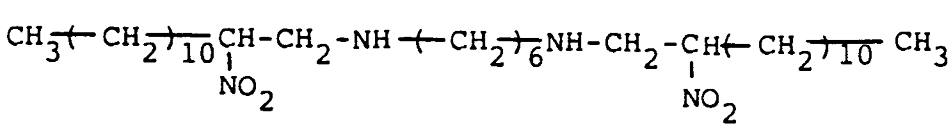

(48) 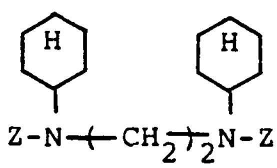

In the formula (A), it is preferred that X is a straight chain saturated aliphatic group of 2 - 12 carbon atoms, $R_1$ is a hydrogen atom and $R_2$ and $R_3$ are both methyl groups. The most preferred is N,N'-bis(2-methyl-2-nitropropyl)-1,6-diaminohexane.

Amount of the dinitrodiamine compound represented by the formula (A) to be added to the modified ethylene-α-olefin-non-conjugated diene copolymer rubber has no special limitation, but if it is too small, the endurance is insufficient and if it is too large, the effect is saturated and this is uneconomical. Therefore, ordinarily it is used in an amount of 0.1 to 10 parts by weight per 100 parts by weight of the modified ethylene-α-olefin-non-conjugated diene copolymer rubber component.

In preparation of the composition of the present invention, there may be optionally added various fillers, softeners, additives, aging inhibitors and the like.

Examples of the fillers are carbon black, silica, talc, calcium carbonate and clay which are conventionally used in the field of rubbers. Carbon black is preferred from the point of fatigue resistance. Carbon black includes, for example, HAF, FEF and SRF blacks and can be used without limitation in strength of reinforcing action.

Moreover, if necessary from the point of processability or the like, unmodified ethylene-α-olefin-non-conjugated diene copolymer rubbers and other rubbers can be added.

For kneading of them, there may be employed internal kneading machines such as Banbury mixer, open rolls and the like which are commonly used in the field of rubber industry.

It is also possible to add to the composition of the present invention known vulcanizers and vulcanization accelerators commonly used in the field of rubber industry and to vulcanize the composition by known methods using a press and an injection molding machine.

The present invention will be explained by the following nonlimiting examples.

Example 1

A rubber component was prepared by kneading components under the conditions mentioned in the column of "Conditions for preparation of rubber component" for Example 1 in Table 1 by 350 E type Brabender mixer (internal volume: 400 ml). Kneading procedure was as follows: Rotor speed was set at 60

rpm, the atmosphere in the mixer was replaced with nitrogen, and then Esprene 671 F (ethylene-propylene-ethylidene norbornene copolymer rubber manufactured by Sumitomo Chemical Co. Ltd. containing 70 parts of oil-extended product) was charged in the mixer, followed by kneading for 2 minutes. Then, other components were charged in accordance with Table 1, followed by further kneading for 8 - 13 minutes to obtain a modified rubber. Addition amount of maleic anhydride is shown in Table 1.

Addition amount of maleic anhydride was measured by the following method.

A small amount of a sample was dissolved in heated xylene and purified by precipitation with anhydrous acetone. Then, the purified sample was again dissolved in xylene and the solution was titrated with a methanolic NaOH solution at 110 - 120 °C using phenolphthalein as an indicator to obtain the addition amount of maleic anhydride.

The resulting modified rubber was kneaded with the compounding ingredients mentioned in the column of "Compounding" (except for vulcanization accelerator and sulfur) by a Banbury mixer of 1.7 liter at 120 °C for 4 minutes. The kneaded product was left until it was cooled to room temperature and then kneaded with vulcanization accelerators TMTD, MBTS and sulfur by an 8 inch open roll at 40 - 60 °C to obtain a compound. Viscosity of this compound was measured by the method of JIS K-6300. Further, this compound was vulcanized using a hot press at 170 °C for 10 minutes to obtain a vulcanized sheet of 2 mm thick. Separately, the compound was vulcanized at 170 °C for 15 minutes to obtain a test piece for measuring compression set.

These vulcanized rubber samples were evaluated on various properties.

Tensile test, tear test, hardness test and compression set test were conducted in accordance with JIS K-6301. Stretch fatigue characteristic was evaluated by measuring the stretching number before breaking under the conditions of strain 0 - 200% and temperature 100 °C using flexing fatigue tester manufactured by Ueshima Seisakusho Co.

The results are shown in Table 2.

Examples 2-3 and Comparative Examples 1-3

The procedure of Example 1 was repeated except that conditions shown in the columns of respective examples and comparative examples in Table 1. The results are shown in Table 2.

Table 1 (part by weight)

| | Example 1 | Example 2 | Example 3 | Comparative Example 1 | Comparative Example 2 | Comparative Example 3 |
|---|---|---|---|---|---|---|
| Conditions for preparation of rubber component | | | | | | |
| Components | | | | | | |
| Esprene 671F *1 | 170 | 170 | 170 | 170 | 170 | 170 |
| Maleic anhydride | 2 | 3.4 | 3.4 | - | - | 3.4 |
| Sumifine 1162 *2 | - | - | - | 2 | - | - |
| Perhexa 3M/40 *3 | 0.1 | 0.1 | 0.1 | - | - | 0.1 |
| Modification conditions | | | | | | |
| Kneading temperature °C | 151 | 150 | 150 | 150 | 150 | 150 |
| Total kneading time (min) | 15 | 10 | 10 | 10 | 10 | 10 |
| Maleic anhydride addition amout wt% | 0.05 | 0.06 | 0.06 | - | - | 0.06 |
| Compounding | | | | | | |
| Rubber component | 172.1 | 173.5 | 173.5 | 172.0 | 170.0 | 173.5 |
| FEF black | 100 | 100 | 100 | 100 | 100 | 100 |
| Diana PW90 *4 | 35 | 35 | 35 | 35 | 35 | 35 |
| Zinc oxide | 5 | 5 | 5 | 5 | 5 | 5 |
| Stearic acid | 1 | 1 | 1 | 1 | 1 | 1 |
| Sumifine 1162 *2 | 2 | 2 | 1 | - | - | - |
| Vulcanization accelerator TMTD | 2 | 2 | 2 | 2 | 2 | 2 |
| Vulcanization accelerator TBTS | 2.5 | 2.5 | 2.5 | 2.5 | 2.5 | 2.5 |
| Sulfur | 1.2 | 1.2 | 1.2 | 1.2 | 1.2 | 1.2 |

*1: Ethylene-propylene-ethylidene norbornene copolymer rubber containing 70 parts of oil-extended rubber manufactured by Sumitomo Chemical Co. Ltd., namely, containing 70 parts by weight of extender oil in the 170 parts by

weight.

*2: N,N'-bis(2-methyl-2-nitropropyl)-1,6-diaminohexane manufactured by Sumitomo Chemical Co. Ltd.

*3: 1,1-Bis(t-butylperoxy) 3,3,5-trimethyl-cyclohexane concentrated to 40% which was an organic peroxide manufactured by Nippon Oil & Fats Co., Ltd.

*4: A process oil manufactured by Idemitsu Kosan Co. Ltd.

Table 2

| Evaluation | Example | | | Comparative Example | | |
|---|---|---|---|---|---|---|
| | 1 | 2 | 3 | 1 | 2 | 3 |
| Viscosity of compound<br>ML1 + 4 100 °C | 70 | 72 | 72 | 67 | 71 | 72 |
| Tensile strength Kgf/cm$^2$ | 180 | 182 | 181 | 178 | 170 | 167 |
| Ultimate elongation % | 600 | 630 | 640 | 590 | 590 | 600 |
| Hardness JIS-A | 55 | 56 | 55 | 56 | 55 | 55 |
| Tear strength Kgf/cm | 35 | 35 | 35 | 34 | 33 | 33 |
| Compression set %<br>100 °C 22Hr | 28 | 28 | 28 | 27 | 30 | 31 |
| Stretch fatigue 10$^3$ time | >700 | >700 | >700 | 41 | 8 | 15 |
| 0 - 200% 100 °C | | | | | | |

As explained above, the present invention provides a rubber composition which is excellent in heat resistance and besides is excellent in fatigue resistance against repeated deformation in ordinary temperature and high temperature atmospheres.

## Claims

**1.** A modified ethylene-α-olefin-non-conjugated diene copolymer rubber composition which comprises an ethylene-α-olefin-non-conjugated diene copolymer rubber modified with an unsaturated carboxylic acid or a derivative thereof and at least one dinitroamine of formula (I)

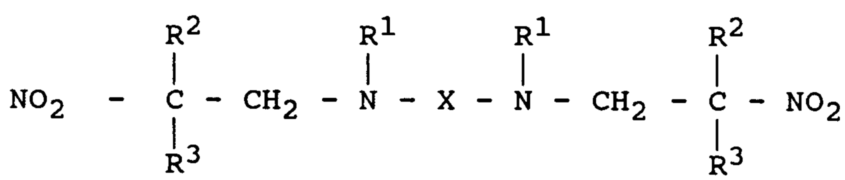

(I)

wherein X is an aliphatic, cycloaliphatic or aromatic group which may contain oxygen and which is unsubstituted or substituted by halogen or oxo-groups and each group $R^1$ is hydrogen, or an aliphatic, cycloaliphatic or aromatic group or X is an aliphatic group and the two groups $R^1$ form an aliphatic chain linking the two nitrogen atoms, and $R^2$ and $R^3$ are the same or different and each is hydrogen or alkyl of 1 to 12 carbon atoms or $R^2$ and $R^3$ together with the carbon atom to which they are bonded form a cycloaliphatic or aromatic group.

**2.** A composition according to claim 1, wherein the derivative of unsaturated carboxylic acid is maleic anhydride.

**3.** A composition according to claim 1 or claim 2 wherein α-olefin is propylene.

**4.** A composition according to any one of claims 1 to 3 comprising a dinitroamine of formula (I) wherein X is a straight chain saturated aliphatic group of 2 - 12 carbon atoms.

**5.** A composition according to any one of claims 1 to 4 comprising a dinitroamine of formula (I) wherein $R^1$ is hydrogen.

**6.** A composition according to any one of claims 1 to 5 comprising a dinitroamine of formula (I) wherein $R^2$ and $R^3$ are both methyl.

**7.** A composition according to any one of claims 1 to 6 wherein the non-conjugated diene is 5-ethylidene-2-norbornene.

**8.** A composition according to any one of claims 1 to 7 comprising an ethylene-α-olefin-non-conjugated diene copolymer rubber modified with an unsaturated carboxylic acid or a derivative thereof and a dinitroamine of formula (I) in a weight ratio of from 100:0.1 to 100:10.

**9.** A composition according to any one of claims 1 to 8 wherein the dinitroamine is N,N′-bis(2-methyl-2-nitropropyl-)1,6-diaminohexane.

**10.** A rubber vibration insulator formed from a composition according to any one of claims 1 to 9.

**Patentansprüche**

**1.** Modifizierte Kautschuk-Zubereitung aus einem Copolymer aus Ethylen, α-Olefin und nicht-konjugiertem Dien, welche einen Kautschuk aus einem Copolymer aus Ethylen, α-Olefin und nicht-konjugiertem Dien umfaßt, der mit einer ungesättigten Carbonsäure oder einem Derivat davon und wenigstens einem Dinitroamin der Formel (I)

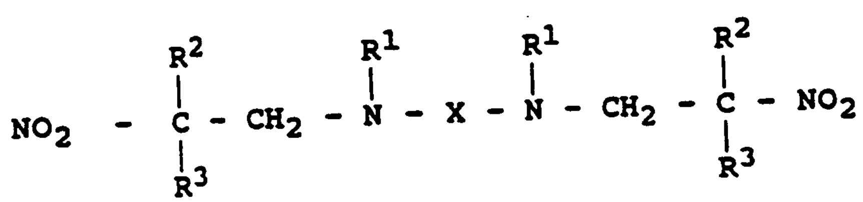

(I)

modifiziert ist, worin X eine aliphatische, cycloaliphatische oder aromatische Gruppe ist, die Sauerstoff enthalten kann und die unsubstituiert oder mit Halogen oder Oxo-Gruppen substituiert ist und jede Gruppe $R^1$ Wasserstoff oder eine aliphatische, cycloaliphatische oder aromatische Gruppe ist oder X eine aliphatische Gruppe ist und die beiden Gruppen $R^1$ eine aliphatische Kette bilden, die die beiden Stickstoffatome verbindet, und $R^2$ und $R^3$ gleich oder verschieden sind und jeweils Wasserstoff oder Alkyl mit 1 bis 12 Kohlenstoffatomen sind oder $R^2$ und $R^3$ zusammen mit dem Kohlenstoffatom, an das sie gebunden sind, eine cycloaliphatische oder aromatische Gruppe bilden.

**2.** Zubereitung nach Anspruch 1, worin das Derivat einer ungesättigten Carbonsäure Maleinsäureanhydrid ist.

3. Zubereitung nach Anspruch 1 oder Anspruch 2, worin das α-Olefin Propylen ist.

4. Zubereitung nach einem der Ansprüche 1 bis 3, umfassend ein Dinitroamin der Formel (I), worin X eine geradkettige, gesättigte aliphatische Gruppe mit 2 bis 12 Kohlenstoffatomen ist.

5. Zubereitung nach einem der Ansprüche 1 bis 4, umfassend ein Dinitroamin der Formel (I), worin $R^1$ Wasserstoff ist.

6. Zubereitung nach einem der Ansprüche 1 bis 5, umfassend ein Dinitroamin der Formel (I), worin $R^2$ und $R^3$ beide Methyl sind.

7. Zubereitung nach einem der Ansprüche 1 bis 6, worin das nicht-konjugierte Dien 5-Ethyliden-2-norbornen ist.

8. Zubereitung nach einem der Ansprüche 1 bis 7, umfassend einen Kautschuk eines Copolymers aus Ethylen, α-Olefin und nicht-konjugiertem Dien, der mit einer ungesättigten Carbonsäure oder einem Derivat davon und einem Dinitroamin der Formel (I) in einem Gewichtsverhältnis im Bereich von 100 : 0,1 bis 100 : 10 modifiziert ist.

9. Zubereitung nach einem der Ansprüche 1 bis 8, worin das Dinitroamin N,N'-Bis(2-methyl-2-nitropropyl-)1,6-diaminohexan ist.

10. Schwingungsabsorber aus Kautschuk, gebildet aus einer Zubereitung nach einem der Ansprüche 1 bis 9.

## Revendications

1. Composition de caoutchouc en copolymère modifié d'éthylène d'α-oléfine et de diène non conjugué, qui comprend un caoutchouc en copolymère d'éthylène d'α-oléfine et de diène non conjugué modifié par un acide carboxylique insaturé ou par l'un de ses dérivés et au moins une dinitroamine de formule (I)

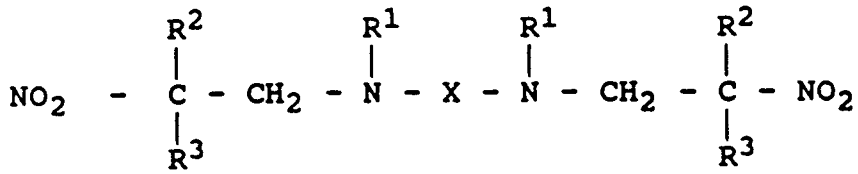

(I)

dans laquelle X est un groupe aliphatique, cycloaliphatique ou aromatique qui peut contenir de l'oxygène et qui n'est pas substitué ou qui est substitué par des groupes halogènes ou oxo et chaque groupe $R^1$ est de l'hydrogène ou un groupe aliphatique, cycloaliphatique ou aromatique ou X est un groupe aliphatique et les deux groupes $R^1$ forment une chaîne aliphatique reliant les deux atomes d'azote, et $R^2$ et $R^3$ sont identiques ou différents et sont chacun de l'hydrogène ou alcoyle ayant de 1 à 12 atomes de carbone ou $R^2$ et $R^3$ forment ensemble avec l'atome de carbone auquel ils sont reliés un groupe cycloaliphatique ou aromatique.

2. Composition suivant la revendication 1, dans laquelle le dérivé d'acide carboxylique insaturé est l'anhydride maléique.

3. Composition suivant la revendication 1 ou 2, dans laquelle l'α-oléfineest le propylène.

4. Composition suivant l'une quelconque des revendications 1 à 3 comprenant une dinitroamine de formule (I), dans laquelle X est un groupe aliphatique saturé linéaire ayant de 2 à 12 atomes de carbone.

5. Composition suivant l'une quelconque des revendications 1 à 4 comprenant une dinitroamine de formule (I), dans laquelle $R^1$ est l'hydrogène.

6. Composition suivant l'une quelconque des revendications 1 à 5, comprenant une dinitroamine de formule (I), dans laquelle $R^2$ et $R^3$ sont tous deux méthyle.

7. Composition suivant l'une quelconque des revendications 1 à 6 dans laquelle le diène non conjugué est le 5-éthylidène-2-norbornène.

8. Composition suivant l'une quelconque des revendications 1 à 7, comprenant un caoutchouc en copolymère d'éthylène d'$\alpha$-oléfine et de diène non conjugué modifié par un acide carboxylique insaturé ou par l'un de ses dérivés et une dinitroamine de formule (I) en un rapport pondéral de 100:0.1 à 100:10.

9. Composition suivant l'une quelconque des revendications 1 à 8, dans laquelle la dinitroamine est le N, N'-bis(2-méthyl-2-nitropropyl)1,6-diaminohexane.

10. Isolant vis-à-vis des vibrations, en caoutchouc, formé à partir d'une composition suivant l'une quelconque des revendications 1 à 9.